# EUROPEAN PATENT APPLICATION

(11) **EP 1 806 498 A1**
(43) Date of publication of application: **11.07.2007**
(21) Application number: 05795678.1
(22) Date of filing: 19.10.2005
(51) Int. Cl.: F02N 11/00, F16D 41/06, F16C 17/04, F16C 33/20, F16H 57/04

(54) **STARTER MOTOR WITH IDLE GEAR**

(30) Priority: 20.10.2004 JP 2004305021
(71) Applicant: Mitsuba Corporation, Kiryu-shi, Gunma 376-8555 (JP)
(72) Inventor: ONO, Hitoshi, c/o MITSUBA Corporation, Kiryu-shi, Gunma 376-8555 (JP); OKADA, Michio, c/o MITSUBA Corporation, Kiryu-shi, Gunma 376-8555 (JP); ENKAKU, Shigeyuki, c/o MITSUBA Corporation, Kiryu-shi, Gunma 376-8555 (JP); SAITO, Shinya, c/o MITSUBA Corporation, Kiryu-shi, Gunma 376-8555 (JP); HORIKOSHI, Chihiro, c/o MITSUBA Corporation, Kiryu-shi, Gunma 376-8555 (JP)
(74) Representative: HOFFMANN EITLE
(86) International application number: PCT/JP2005/019179
(87) International publication number: WO 2006/043580

(57) **Abstract**

A helical spline section 61 is formed on a drive shaft 32 rotated by a motor 11 via a planetary gear mechanism 12, and an axially movable overrunning clutch 13 is mounted to the helical spline section 61. A clutch inner 57 of the overrunning clutch 13 is formed integrally with a pinion 14, and the pinion 14 engages with an idle gear 15. Between the idle gear 15 and the clutch cover 68 of the overrunning clutch 13, there is provided a synthetic resin slip plate 95. The slip plate 95 is provided with slide-contact surfaces 95a and 95b coming into contact with the idle gear 15 and the clutch cover 68. On each of the slide-contact surfaces 95a and 95b, there is provided concavely an annular grease reservoir 96 holding grease on each of the slide-contact surfaces. Thereby, the lubricating ability of a spacer provided between the slide-contact members having mutually different rotation numbers is improved, resulting in reducing the cost of materials and preventing the burn-in between the members.

## Description

### Technical Field

The present invention relates to an electric starter motor mounted to an engine for automotive etc., and more particularly, to the electric starter motor with the idle gear being rotary-driven by the motor and movable in an axial direction.

### Background Art

In engines used in cars, two-wheeled motor vehicles and large generators and the like, a starting operation is generally performed by an electric starter motor (starter motor) mounted to an engine. As such an electric starter motor, as in Patent Document 1, one with an axially movable idle gear is known. This idle gear is arranged engageably and disengageably with and from a ring gear of the engine. Both gears are adapted to engage with each other when the engine is started, and to disengage from each other after the engine has been started. The idle gear engages also with a pinion rotary-driven by the electric starter motor, and the pinion is connected to the rotary shaft of the motor via an overrunning clutch.

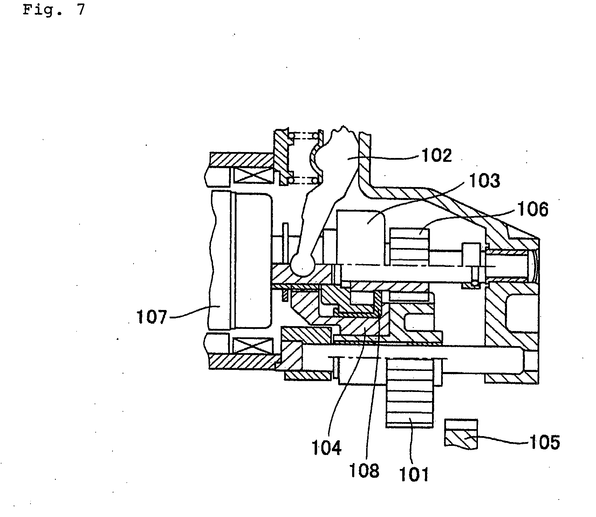

FIG. 7 is an illustrative view showing structures of mechanisms for controlling the engagement and disengagement between the idle gear and ring gear in such a conventional electric starter motor. The mechanism of FIG. 7 has a structure already employed in the electric starter motors of Patent Documents 1 to 3. An idle gear 101 moves axially by the operation of a shift lever 102. The shift lever 102 is driven by an electromagnetic switch (not shown) and engages on the distal end side thereof with one end side of an overrunning clutch 103. The overrunning clutch 103 is movable axially and moves to the right in the figure by the operation of the shift lever 102.

The other end side of the overrunning clutch 103 contacts with the idle gear 101 via a spacer 104. The spacer 104 is made of synthetic resin or metal and is provided between a clutch cover 108 of the overrunning clutch 103 and the idle gear 101 so that both members having mutually different hardness may not come into contact directly with each other. In addition, grease is applied between the spacer 104 and the clutch cover 108 and between the spacer 104 and the idle gear 101 to improve slidability.

When the overrunning clutch 103 moves to the right in the figure, the idle gear 101 also moves to the right concurrently to engage with a ring gear 105. The idle gear 101 engages with a pinion 106, and when the pinion 106 is rotary-driven by a motor 107 via the overrunning clutch 103, the rotations are transmitted from the idle gear 101 to the ring gear 105, starting the engine.

When the engine is started, the rotations thereof are transmitted from the ring gear 105 via the idle gear 101 to the pinion 106. At this time, when the rotation number of the pinion 106 is larger than that of a motor 107, the overrunning clutch 103 goes into an overrun state, inhibiting the transmission of the rotations of the pinion 106 to the motor 107 side. On the other hand, when the electromagnetic switch is turned OFF, the distal end of the shift lever 102 moves to the left in the figure. Thereby, the overrunning clutch 103, pinion 106 and idle gear 101 move to the left, disengaging the idle gear 101 from the ring gear 105.
Patent Document 1: Jpn. Pat. Appln. Laid-Open Publication No. 61-204968
Patent Document 2: Jpn. Pat. Appln. Laid-Open Publication No. 5-71454
Patent Document 3: Jpn. Pat. Appln. Laid-Open Publication No. 11-37021
Patent Document 4: Jpn. Pat. Appln. Laid-Open Publication No. 4-303175

### Disclosure of the Invention

### Problems to be Solved by the Invention

However, in an electric starter motor as shown in FIG. 7, since the sliding action due to a high rotation speed is exerted on the spacer 104 between the clutch cover 108 and the idle gear 101, a highly wear-resistant and highly mechanically strong material need be used for the spacer 104. Thus, an expensive material must be used for the spacer 104, resulting in a problem of a rising cost of parts. In addition, since the idle gear 101 is operated at a high rotation speed, the grease applied on the spacer 104 is liable to spatter, resulting in another problem of a possibility of causing burn-in between the members in combination with the influence of heat. Even if the spacer 104 is provided between the clutch cover 108 and the pinion 106, such problems occur similarly. Therefore, they are required to be eliminated in order to reduce cost and improve reliability.

An object of the present invention is to provide an electric starter motor configured to reduce the material cost by improving the lubricating ability of the spacer provided between the slide-contact members having different rotation numbers and also to be resistant to the burn-in between the members.

### Means for Solving the Problems

An electric starter motor with idle gear according to the present invention is characterized by comprising: an output shaft rotated by a motor; an overrunning clutch mounted to a spline section formed on the output shaft and movable axially along the spline section; a pinion connected via the overrunning clutch to the output shaft to be rotary-driven in one direction by the rotations of the output shaft and to move axially together with the overrunning clutch; an idle shaft provided parallel to the output shaft; an idle gear rotatably and axially movably supported by the idle shaft to engage with and disengage from the ring gear of the engine by the axial movement thereof; and a slip plate provided between the idle gear and the overrunning clutch and including a slide-contact surface coming into contact with the idle gear and the overrunning clutch, the slide-contact surface being provided with a concave lubricant holding section for holding a lubricant supplied thereto.

In the present invention, since there is provided between the idle gear and the overrunning clutch a slip plate of which slide-contact surface includes a lubricant holding section, there is a large lubricant holding effect on the slide-contact surface, preventing a shortage of lubricant. Thus, the lubrication effect between the slip plate and the idle gear and the overrunning clutch is enhanced, enabling the wear of the member on the overrunning clutch side and the burn-in of each member to be prevented. In addition, a high lubricant retentivity alleviates the wear resistance and mechanical strength required of the slip plate.

In the above electric starter motor with idle gear, the slide-contact surface may be provided on each of both sides of the ring-like slip plate, and the lubricant holding section may be provided annularly along the circumferential direction of the slide-contact surface. In this case, a plurality of lubricant holding sections may be provided on the slide-contact surface along the radial direction thereof.

In the electric starter motor with idle gear, the slide-contact surface may be provided on each of both sides of the ring-like slip plate, and a plurality of lubricant holding sections formed like a circular hole having a bottom may be provided on the slide-contact surface along the circumferential direction thereof.

On the other hand, in the electric starter motor with idle gear, the slip plate may be made of a glass-fiber-reinforced synthetic resin.

### Advantages of the Invention

According to the electric starter motor with idle gear of the present invention, since not only a slide-contact surface coming into contact with the idle gear and the overrunning clutch, but also a slip plate of which slide-contact surface includes a lubricant holding section is provided between the idle gear and the overrunning clutch, there is a large-lubricant holding effect on the slide-contact surface, preventing a shortage of lubricant. Thus, the lubrication effect between the slip plate and the idle gear as well as the overrunning clutch is enhanced respectively, enabling the wear of the member on the overrunning clutch side and the burn-in of each member to be prevented and the service life and reliability of the product to be improved. In addition, a high lubricant retentivity alleviates the wear resistance and mechanical strength to be required, resulting in using materials of lower price and reducing the cost of parts.

### Brief Description of the Drawings

FIG. 1 is a cross-sectional view of a configuration of an electric starter motor according to a first embodiment of the present invention;
FIGS. 2(a) and 2(b) are views showing a configuration of a slip plate used in the electric starter motor of FIG. 1, FIG. 2(a) is a perspective view of the slip plate, and FIG. 2(b) is a cross sectional view of the slip plate of FIG. 2(a);
FIG. 3 is a cross sectional view showing a configuration of the electric starter motor of FIG. 1 in an operating state when the motor is turned ON by the ignition key switch;
FIGS. 4(a) and 4(b) are views showing a configuration of a slip plate used in an electric starter motor according to a second embodiment of the present invention, FIG. 4(a) is a perspective view of the slip plate, and FIG. 4(b) is a cross-sectional view of the slip plate of FIG. 4(a);
FIGS. 5(a) and 5(b) are views showing a configuration of a slip plate used in an electric starter motor according to a third embodiment of the present invention, FIG. 5(a) is a perspective view of the slip plate, and FIG. 5(b) is a cross-sectional view taken along the line A-A of FIG. 5;
FIG. 6 is an essential-part enlarged view showing a configuration of an electric starter motor according to a fourth embodiment of the present invention; and
FIG. 7 is an illustrative view showing one example of a mechanism for controlling the engagement and disengagement between an idle gear and a ring gear in a conventional electric starter motor.

### Explanation of Reference Symbols

- 1:: electric starter motor

- 2:: motor section
- 3:: gear section
- 4:: magnet switch section
- 5:: case section
- 6:: idle section
- 11:: motor (electric motor)
- 12:: planetary gear mechanism
- 13:: overrunning clutch
- 14:: pinion
- 15:: idle gear
- 16:: ring gear
- 21:: motor housing
- 22:: armature
- 23:: end cover
- 24:: gear cover
- 25:: set bolt
- 26:: permanent magnet
- 27:: motor shaft
- 28:: armature core
- 29:: armature coil
- 31:: metal bearing
- 32:: drive shaft (output shaft)
- 33:: bearing section
- 34:: metal bearing
- 35:: commutator
- 36:: commutator piece
- 37:: brush holder
- 38:: brush holding section
- 39:: brush
- 41:: conductive plate
- 42:: switch section
- 43:: switch plate
- 44:: power source terminal
- 45:: switch shaft
- 46:: internal gear unit
- 47:: drive plate unit
- 48:: internal gear
- 49:: metal bearing
- 51:: planetary gear
- 52:: base plate
- 53:: support pin
- 54:: metal bearing
- 55:: sun gear
- 56:: clutch outer (outer section)
- 56a:: boss section
- 56b:: clutch section
- 57:: clutch inner (inner section)
- 58:: roller (roller member)
- 59:: clutch spring
- 61:: helical spline section
- 62:: spline section
- 63:: stopper
- 64:: circlip
- 65:: gear return spring
- 66:: inner end wall
- 67:: clutch stopper
- 68:: clutch cover
- 69:: clutch washer
- 71:: gear section
- 72:: transport flange (idle gear transport means)
- 73:: curved section
- 74:: shaft hole
- 75:: spring holding section
- 76:: pinion gear metal
- 77:: secured section
- 78:: movable section
- 79:: case
- 81:: coil
- 82:: stationary iron core
- 83:: movable iron core
- 84:: gear plunger
- 85:: bracket plate
- 86:: plunger spring
- 87:: slide bearing
- 88:: metal bearing
- 89:: idle shaft
- 90:: switch return spring
- 91:: metal bearing
- 92:: gear section
- 93:: boss section
- 94:: boss section
- 95:: slip plate
- 95a, 95b:: slide-contact surface
- 96:: grease reservoir (lubricant holding section)
- 96a, 96b, 96c:: grease reservoir (lubricant holding section)
- 97:: slip plate
- 97a, 97b:: slide-contact surface
- 98:: slip plate
- 98a, 98b:: slide-contact surface
- 99:: electric starter motor
- 100:: C-ring
- 101:: idle gear
- 102:: shift lever
- 103:: overrunning clutch
- 104:: spacer
- 105:: ring gear
- 106:: pinion
- 107:: motor
- 108:: clutch cover

### Best Mode for Carrying Out the Invention

Now, the present invention will be described in greater detail by referring to the accompanying drawings.

### First Embodiment

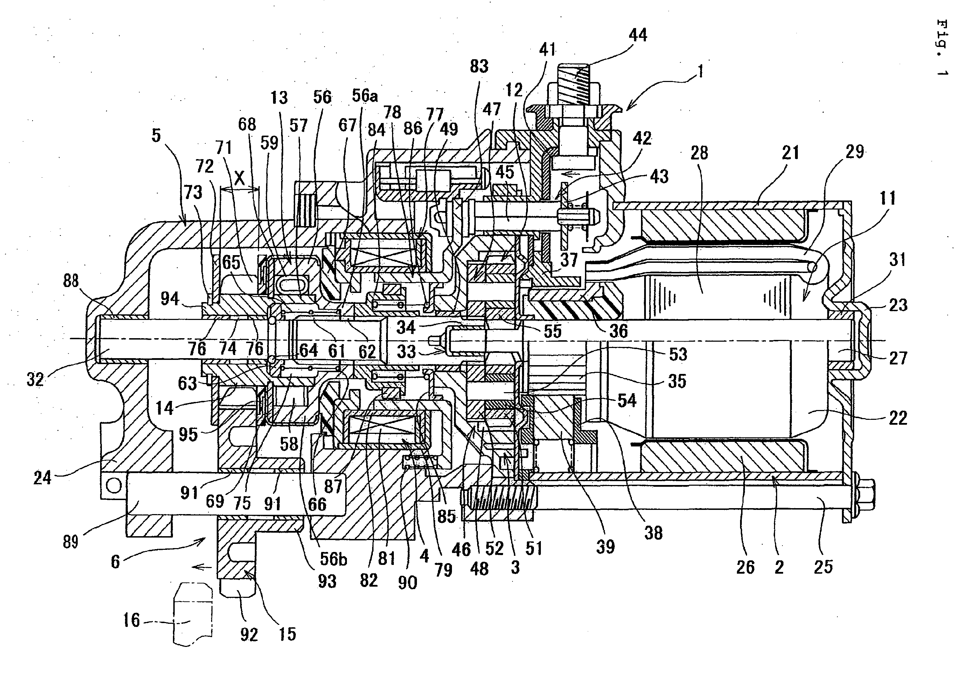

FIG. 1 is a cross-sectional view of a configuration of an electric starter motor according to a first embodiment of the present invention. The electric starter motor 1 of FIG. 1 is used for starting an automotive engine, giving rotations to a resting engine required for intake, atomization, compression and ignition of fuel.

Roughly speaking, the electric starter motor 1 comprises a motor section 2, a gear section 3, a magnet switch section 4, a case section 5 and an idle section 6. In the motor section 2, there is provided a motor (electric motor) 11 as a driving source, and in the gear section 3, there are provided a planetary gear mechanism 12, an overrunning clutch 13 and a pinion 14 as reduction gears. In the idle section 6, there is provided an idle gear 15 engaging with the pinion 14. The idle gear 15 is mounted so as to be movable axially (in the left and right directions in the figure), and when moving in the left direction in the figure (hereinafter, the left and right direction will be based on FIG. 1 and the phrase "in the figure" will be omitted), the idle gear 15 engages with a ring gear 16 of the engine. The torque of the motor 11 is transmitted to the pinion 14 via the planetary gear mechanism 12 and the overrunning clutch 14, and then, from the idle gear 15 to the ring gear 16, starting the engine.

The motor 11 is configured to arrange an armature 22 rotatably within a cylindrical motor housing 21. The motor housing 21 acts also as the yoke of the motor 11 and is made of a magnetic metal such as iron. A metallic end cover 23 is mounted to the right end section of the motor housing 21. On the other hand, a gear cover 24 of the case section 5 is mounted to the left end section of the motor housing 21. The end cover 23 is secured to the gear cover 24 by a set bolt 25, and the motor housing 21 is secured between the end cover 23 and the gear cover 24.

A plurality of permanent magnets 26 are secured to the inner circumferential surface of the motor housing 21 in a circumferential direction, and an armature 22 is provided inside each of the permanent magnets 26. The armature 22 is composed of an armature core 28 secured to a motor shaft 27 and an armature coil 29 wound on the armature core 28. The right end section of the motor shaft 27 is supported rotatably by a metal bearing 31 mounted on the end cover 23. On the other hand, the left end section of the motor shaft 27 is supported rotatably by an end section of a drive shaft (output shaft) 32 to which the pinion 14 is mounted. In the right end section of the drive shaft 32 a bearing section 33 is provided concavely, and the motor shaft 27 is supported rotatably by a metal bearing 34 mounted to the bearing section 33.

On one end side of the armature core 28, there is arranged adjacently a commutator 35 secured to the motor shaft 27 with being fitted thereon. A plurality of commutator pieces 36 made of a conductive material are fitted to the outer circumferential surface of the commutator 35, and the end section of the armature coil 29 is secured to each of the commutator pieces 36. A brush holder 37 is mounted to the left end section of the motor housing 21. Four brush holding sections 38 are arranged in the brush holder 37 with being spaced in a circumferential direction. A brush 39 is contained in each brush holding section 38 so as to be able to appear freely. The projecting distal end (inner diameter side distal end) of the brush 39 is in sliding contact with the outer circumferential surface of the commutator 35.

To the rear end side of the brush 39, there is mounted a pig tail (not shown), which is connected electrically to a conductive plate 41 of the brush holder 37. A switch section 42 is provided on the conductive plate 41, and when a switch plate 43 comes into contact with the conductive plate 41, an electric connection is made between a power source terminal 44 and the brushes 39, supplying electric power to the commutator 35. The switch plate 43 is mounted to a switch shaft 45, and when the magnet switch section 4 turns on electricity, the switch shaft 45 moves to the left to bring the switch plate 43 into contact with the conductive plate 41.

In the planetary gear mechanism 12 of the gear section 3, there are provided an internal gear unit 46 and a drive plate unit 47. The internal gear unit 46 is secured to the right end side of the gear cover 24, and on the inner circumferential side thereof, an internal gear 48 is formed. A metal bearing 49 is contained in the center of the internal gear unit 46, supporting the right end side of the drive shaft 32 rotatably. The drive plate unit 47 is secured to the right end side of the drive shaft 32, and three planetary gears 51 are mounted with being equally spaced. The planetary gears 51 are supported rotatably by a support pin 53 secured to a base plate 52 via a metal bearing 54. The planetary gears 51 engage with the internal gear 48.

In the left end side of the motor shaft 27, a sun gear 55 is formed. The sun gear 55 engages with the planetary gears 51, and the planetary gears 51 rotate and revolute between the sun gear 55 and the internal gear 48. When the motor 11 is operated, the sun gear 55 rotates together with the motor shaft 27, and the rotations of the sun gear 55 are accompanied by the revolutions of the planetary gears 51 around the sun gear 55 with the planetary gears 51 engaging with the internal gear 48. Thereby, the base plate 52 secured to the drive shaft 32 is rotated, transmitting the decelerated rotations of the motor shaft 27 to the drive shaft 32.

The overrunning clutch 13 transmits the rotations decelerated by the planetary gear mechanism 12 to the pinion 14 in one rotation direction. The overrunning clutch 13 is configured to arrange a roller 58 and a clutch spring 59 between a clutch outer 56 and a clutch inner 57. The clutch outer 56 comprises a boss section 56a and a clutch section 56b, and the boss section 56a is mounted to a helical spline section 61 of the drive shaft 32. On the inner circumferential side of the boss section 56a, there is formed a spline section 62 engaging with the helical spline section 61. Thereby, the clutch outer 56 is made movable axially on the drive shaft 32 along the helical spline section 61.

A stopper 63 is mounted to the drive shaft 32. The stopper 63 is hindered to move axially by a circlip 64 fitted to the drive shaft 32. One end side of a gear return spring 65 is attached to the stopper 63. The other end side of the gear return spring 65 is in contact with the inner end wall 66 of the boss section 56a. The clutch outer 56 is pushed to the right by this gear return spring 65, and at normal times (at the time of no power distribution), the clutch outer 56 is held with being in contact with a clutch stopper 67 secured to the gear cover 24.

On the inner circumference of the clutch section 56b of the clutch outer 56, there is provided a clutch inner 57 formed integrally with the pinion 14. A plurality of pairs of rollers 58 and clutch springs 59 are arranged between the clutch outer 56 and clutch inner 57. In addition, on the outer circumference of the clutch section 56b, a clutch cover 68 is provided, and a clutch washer 69 is fitted between the left end surface of the clutch section 56b and the clutch cover 68. By this clutch washer 69, the roller 58 and the clutch spring 59 are contained on the inner circumferential side of the clutch section 56b with being hindered to move axially.

The inner circumferential wall of the clutch section 56b is formed as a cam surface including a cuneiform slope section and a curved section. The roller 58 is usually pushed by the clutch spring 59 toward the curved section side. When the clutch outer 56 rotates and the roller 58 is interposed between the cuneiform slope section and the outer circumferential surface of the clutch inner 57 against the pushing force of the clutch spring 59, the clutch inner 57 rotates together with the clutch outer 56 via the roller 58. Thereby, when the motor 11 is operated and the drive shaft 32 rotates, the rotations thereof are transmitted from the clutch outer 56 via the roller 58 to the clutch inner 57, rotating the pinion 14.

On the contrary, when the engine is started and the clutch inner 57 rotates faster than the clutch outer 56, the roller 58 moves to the curved section side, bringing the clutch inner 57 into an idle running state to the clutch outer 56. That is, when the clutch inner 57 comes into an overrunning state, the roller 58 is not interposed between the cuneiform slope section and the outer circumferential surface of the clutch inner 57 and the rotations of the clutch inner 57 are not transmitted to the clutch outer 56. Accordingly, even if the clutch inner 57 is rotated faster from the engine side after the engine start, the rotations thereof are interrupted by the overrunning clutch 13 and are not transmitted to the motor 11 side.

The pinion 14 is a steel member formed by cold forging and engages with the idle gear 15. The pinion 14 is formed integrally with the clutch inner 57, and on the left of the clutch inner 57, there are provided a gear section 71 and a boss section 94. The outer diameter of the boss section 94 is smaller than the root outer diameter of the gear section 71, thereby enabling the pinion 14 to be formed easily by cold forging. By forming the pinion 14 by cold forging, the pinion 14 has an improved axial dimensional accuracy of the gear section 71 (dimension X in the figure) and reduces backlashes between parts, for example, between the pinion 14 and idle gear 15, preventing the parts from being damaged and worn. In addition, by forming the gear section 71 by cold forging, the gear section 71 has an improved work hardness and enhanced strength, enabling the strength of the gear connection section to be enhanced.

A steel pinion washer 72 is fitted onto the boss section 94. The pinion washer 72 is retained axially by a C ring 73 mounted to the boss section 94. The outer circumferential section of the pinion washer 72 is in contact with the left side surface of the idle gear 15, and when the power distribution is stopped after the start of the engine, the idle gear 15 is moved to the right together with the pinion 14, disengaging the idle gear 15 from the ring gear 16.

A synthetic resin (for example, glass-fiber-reinforced polyamide) slip plate 95 is provided between the gear section 71 and the clutch cover 68. When the gear section 71 and the clutch cover 68 having mutually different hardness come into contact directly with each other, the clutch cover 68 is worn by the rotations of the gear section 71. Thus, in the electric starter motor 1, a synthetic resin slip plate 95 is provided between the gear section 71 and the clutch cover 68 to prevent the clutch cover 68 from being worn. The slip plate 95 is formed ring-like and the outer circumference thereof is in contact with the right side surface of the idle gear 15. At the portion coming into contact with the idle gear 15, there is provided the slip plate 95 between the clutch cover 68 and the idle gear 15. Between the slip plate 95 and the clutch cover 68, gear section 71 as well as the idle gear 15, respectively, grease is applied as a lubricant to improve the slidability.

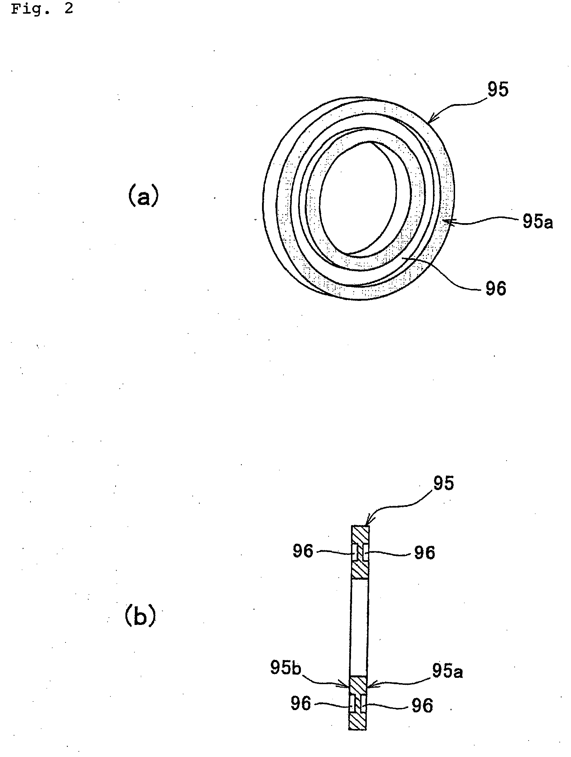

FIG. 2(a) and 2(b) are views showing a configuration of the slip plate 95, FIG. 2(a) is a perspective view of the slip plate 95, and FIG. 2(b) is a cross-sectional view of the slip plate 95. The slip plate 95 is formed ring-like, and on each of the slide-contact surfaces 95a and 95b of both sides thereof, there is formed a groove-like grease reservoir (lubricant holding section) 96. The grease reservoir 96 is formed like a circular- groove-like and is provided along the entire circumference of the slip plate 95. Grease is reserved in the grease reservoir 96 and is supplied as needed to the slide-contact surface between the slip plate 95 and the clutch cover 68. As described above, the conventional spacer has only a small grease retentivity, and thus, when the idle gear 15 is operated at a high rotation speed, grease may scatter, resulting in a shortage of grease.

On the contrary, since the grease reservoir 96 is provided on the slide-contact surface, the cover 94 has a large grease retentivity, remarkably reducing the possibility of a shortage of grease. Thus, the lubrication effect between the slip plate 95 and the clutch cover 68, gear section 71 as well as idle gear 15 is enhanced respectively, enabling the wear of the clutch cover 68 and the burn-in of each member to be prevented and the service life and reliability of the product to be improved. In addition, a high grease retentivity alleviates the wear resistance and mechanical strength to be required, resulting in using materials of lower price and reducing the cost of parts.

On the inner circumferential side of the pinion 14, there are formed a shaft hole 74 and a spring holding section 75. In the shaft hole 74, a pinion gear metal 76 is fitted, and the pinion 14 is supported rotatably by the drive shaft 32 via the pinion gear metal 76. The spring holding section 75 is formed on the inner circumferential side of the clutch inner 57, and the stopper 63 and the gear return spring 65 are held therein.

The magnet switch section 4 is arranged concentrically with the motor 11 and the planetary gear mechanism 12 on the left side of the planetary gear mechanism 12. The magnet switch section 4 comprises a steel secured section 77 secured to the gear cover 24 and a movable section 78 arranged movably in the left and right directions along the drive shaft 32. In the secured section 77, there are provided a case 79 secured to the gear cover 24, a coil 81 held in a case 79 and a stationary iron core 82 mounted to the inner circumferential side of the case 79. In the movable section 78, there is provided a movable iron core 83 to which the switch shaft 45 is mounted, and on the inner circumferential side of the movable iron core 83, a gear plunger 84 is mounted. On the outer circumferential side (lower end side in the figure) of the movable iron core 83, a switch return spring 90 is fitted. The other end side of the switch return spring 90 is in contact with the gear cover 24, and the movable iron core 83 is pushed to the right.

To inner circumference of the movable iron core 83, a bracket plate 85 is secured further. One end of a plunger spring 86 is secured to the bracket plate 85 by caulking. When the ignition key switch is turned OFF (in the state of FIG. 1), the other end of the plunger spring 86 contacts with a gear plunger 84, and the gear plunger 84 is pushed by the plunger spring 86 to the left. The gear plunger 84 is mounted axially movably to the drive shaft 32, and a slide bearing 87 is provided between the gear plunger 84 and the inner circumferential surface of the movable iron core 83.

The case section 5 is provided with the aluminum die-cast gear cover 24, and the left end side of the drive shaft 32 is supported rotatably by the gear cover 24 via a metal bearing 88. To the gear cover 24, there is further mounted an idle shaft 89 supporting the idle gear 15. The left end side of the idle shaft 89 is retained by an idle shaft stopper (not shown). Within the gear cover 24, as described above, the synthetic resin (for example, glass-fiber-reinforced polyamide) clutch stopper 67 and the case 79 are secured, and to the right end side thereof, the motor housing 21 and the end cover 23 are secured by the set bolt 25.

In the idle section 6, there is provided the idle gear 15. The idle gear 15 is supported rotatably by the idle shaft 89 via a metal bearing 91. In the idle gear 15, there are provided a gear section 92 and a boss section 93. The gear section 92 engages with the gear section 71 of the pinion 14.

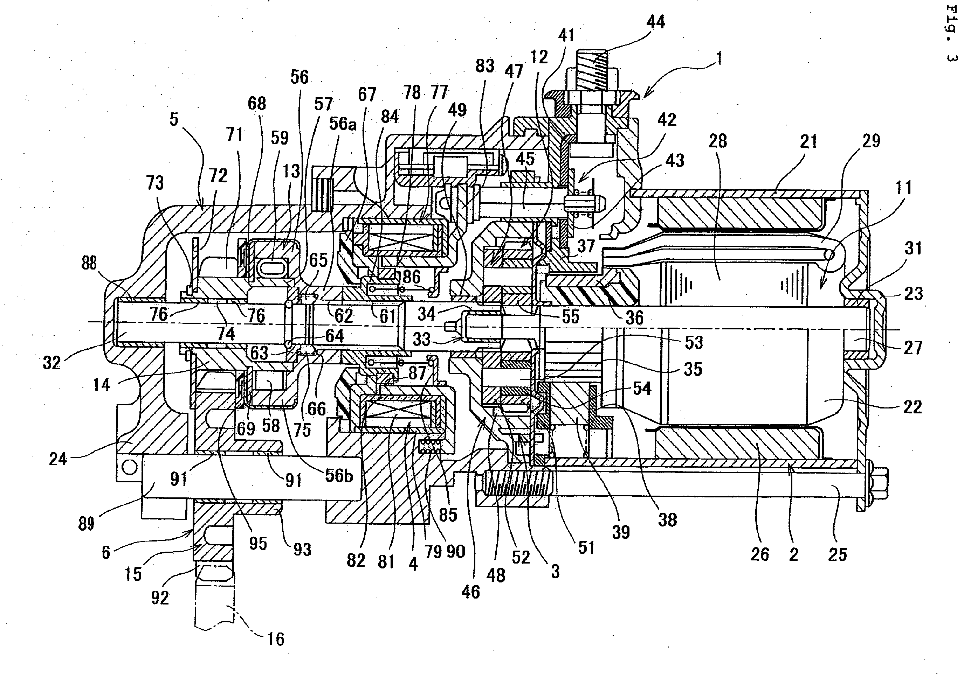

Now, the starting operation of an engine using such an electric starter motor 1 will be described. First, as shown in FIG. 1, when the ignition key switch of a car is turned OFF, the clutch outer 56 contacts with the clutch stopper 67 by the pushing force of the gear return spring 65. At this time, the switch plate 43 is spaced from the conductive plate 41, supplying no current to the motor 11. Further, the idle gear 15 is in the disengagement position on the right and is disengaged from the ring gear 16. On the other hand, as shown in FIG. 3, when the ignition key switch is turned ON, the idle gear 15 moves to the left, engaging with the ring gear 16.

That is, when the ignition key switch is turned ON, current flows first to the coil 81, creating suction at the magnet switch section 4. When the coil 81 is excited, a magnetic path extending through the case 79 and the stationary iron core 82 is formed, sucking the movable iron core 83 to the left. When the movable iron core 83 moves to the left against the pushing force of the switch return spring 90, the switch shaft 45 moves also to the left, bringing the switch plate 43 into contact with the conductive plate 41 to close a contact. Thereby, an electric connection is made between the power source terminal 44 and the brush 39, supplying power to the commutator 35 to start the motor 11 and rotate the armature 22. In addition, the bracket plate 85 moves also to the left, thereby compressing the plunger spring 86.

When the armature 22 is rotated, the drive shaft 32 is rotated via the planetary gear mechanism 12. The rotations of the drive shaft 32 are accompanied by the rotations of the clutch outer 56 mounted to the helical spline section 61. The twisting direction of the helical spline section 61 is set in consideration of the rotation direction of the drive shaft 32. As the clutch outer 56 rotates faster, the clutch outer 56 moves to the left along the helical spline section 61 (rest position → operation position) due to the inertial mass thereof. When the clutch outer 56 protrudes to the left, the pinion 14 also moves to the left together with the clutch outer 56. At this time, also the gear return spring 65 is compressed by being pushed by the clutch outer 56.

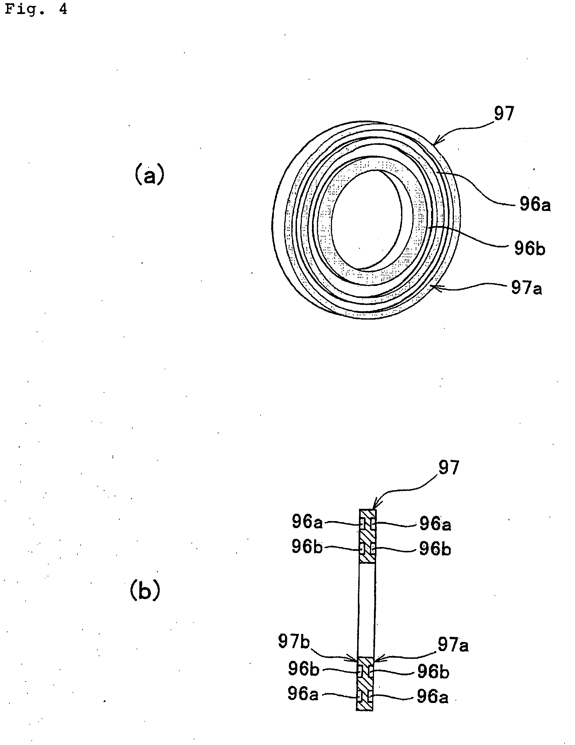

When the clutch outer 56 moves to the left, also the idle gear 15 moves to the left by being pushed by the clutch outer 56, engaging with the ring gear 16 as shown in FIG. 4. When the idle gear 15 engages with the ring gear 16, the rotations of the motor 11 are transmitted to the ring gear 16, rotating the ring gear 16. The ring gear 16 is connected to a crankshaft of the engine. The rotations of the ring gear 16 are accompanied by the rotations of the crankshaft, starting the engine. When the engine is started, the pinion 14 is rotated with a high rotation speed by the ring gear 16 via the idle gear 15. However, the rotations thereof are not transmitted to the motor 11 side by the action of the overrunning clutch 13.

When the engine is started and the idle gear 15 is rotated at a high rotation speed, a difference in rotation number is made between the clutch cover 68 and the idle gear 15 as well as pinion 14 due to overrun. This difference in rotation number brings the slip plate 95 provided between the clutch cover 68 and the idle gear 15 as well as the pinion 14 into slide-contact with the pinion 14 and the idle gear 15. At that time, the grease reservoir 96 formed in the slip plate 95 prevents a shortage of grease, remarkably reducing the wear of the clutch cover 68 and the burn-in of each member.

Further, when the clutch outer 56 moves to the left, the gear plunger 84 moves to the left by the pushing force of the compressed plunger spring 86, and then contacts with the right end surface of the clutch outer 56. At this time, the plunger spring 86 goes into a natural length state, creating a small gap between the gear plunger 84 contacting with the clutch outer 56 and the plunger spring 86.

When the engine is started, the pinion 14 is rotated with a high rotation speed, and the overrunning clutch 13 is rotated in an idle running direction. When the overrunning clutch 13 is rotated in the idle running direction, idle running torque is created in the clutch, applying torque called cutting torque to the clutch outer 56. This torque creates rightward thrust force in the clutch outer 56 via the helical spline section 61, moving the clutch outer 56 to the right. As a result, the idle gear 15 may be disengaged from the ring gear 16. Thus, in the electric starter motor 1, the clutch outer 56 is held by the gear plunger 84 in the operated position, regulating the rightward movement of the idle gear 15 to prevent the idle gear 15 from being disengaged.

On the other hand, when the ignition key switch is turned OFF after the engine has been started, the power distribution to the magnet switch section 4 is stopped, and the suction thereof disappears. Then, the bracket plate 85 is pushed by the pushing force of a switch return spring 90 to the right, moving the movable iron core 83 held on the left by the suction of the stationary iron core 82 to the right. When the movable iron core 83 moves to the right, the switch shaft 45 also moves to the right, separating the switch plate 43 from the conductive plate 41 to open the contact. Thereby, the power supply to the motor 11 is shut off, stopping the rotations of the drive shaft 32 to stop also the rotations of the clutch outer 56.

When the rotations of the clutch outer 56 are stopped, also the axial moving force due to the inertial mass thereof disappears. Thus, by the pushing force of the compressed gear return spring 65, the clutch outer 56 moves to the right from the operated position to the rest position along the helical spline section 61. At this time, the gear plunger 84 is also pushed by the clutch outer 56 and returns to the state of FIG. 1. In addition, the pushing force of the gear return spring 65 is set to be greater than that of the plunger spring 86 at that time.

When the clutch outer 56 moves to the right, the pinion 14 also moves to the right. When the pinion 14 moves to the right, the pinion washer 72 contacts with the left end surface of the idle gear 15. Thereby, the idle gear 15 is moved by the pinion washer 72 to the right, disengaging the idle gear 15 from the ring gear 16.

### Second Embodiment

Now, an electric starter motor according to the second embodiment of the present invention will be described. FIGS. 4(a) and 4(b) are views showing a configuration of a slip plate used in an electric starter motor of the second embodiment, FIG. 4(a) is a perspective view of the slip plate, and FIG. 4(b) is a cross sectional view of the slip plate. The electric starter motor of second embodiment is different only in the aspect of the slip plate from the electric starter motor of the first embodiment, and the other sections thereof are same as those of the electric starter motor 1 of the first embodiment. In the following embodiments, the same members and portions thereof as those of the first embodiment are denoted by the same reference symbols, and the descriptions thereof will be omitted. The slip plate 97 of FIG. 4 is also formed ring-like, and on each of the slide-contact surfaces 97a and 97b on both sides of the slip plate 97, there are formed two grease reservoirs 96a and 96b. The grease reservoirs 96a and 96b are formed circular-groove-like and are provided along the entire circumference of the slip plate 97.

### Third Embodiment

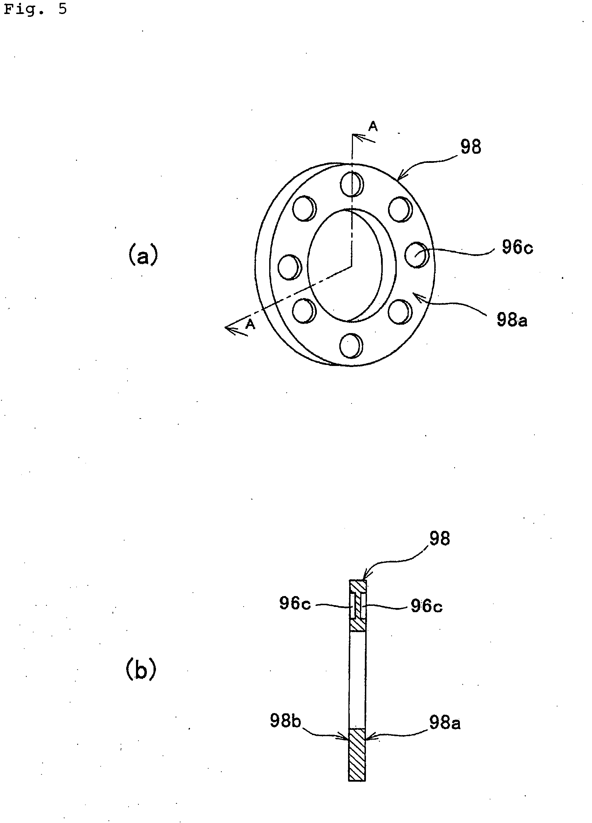

FIGS. 5(a) and 5(b) are views showing a configuration of a slip plate used in an electric starter motor according to the third embodiment of the present invention, FIG. 5(a) is a perspective view of the slip plate, and FIG. 5(b) is a cross-sectional view taken along the line A-A of the slip plate of FIG. 5(a). The electric starter motor of the third embodiment is different also only in the aspect of the slip plate from the electric starter motor 1 of the first embodiment, and the other sections thereof are same as those of the electric starter motor 1 of the first embodiment. The slip plate 98 of FIG. 5 is also formed ring-like, and on each of the slide-contact surfaces 98a and 98b on both sides of the slip plate 98, there are formed a plurality of circular grease reservoirs 96c. The circular grease reservoirs 96c are formed like a circular hole having a bottom and are provided along the entire circumference of the slip plate 98 in the circumferential direction thereof with being spaced by a predetermined interval.

### Fourth Embodiment

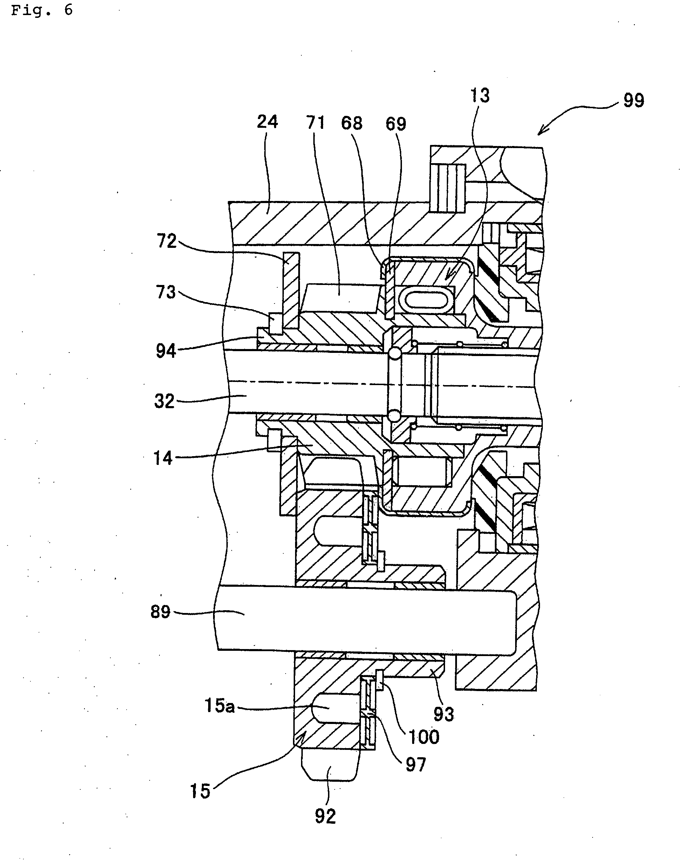

FIG. 6 is an essential-part enlarged view showing a configuration of an electric starter motor according to the fourth embodiment of the present invention. In the electric starter motor 99 of FIG. 6, the slip plate 97 of FIG. 4 is mounted to the boss section 93 of the idle gear 15. The slip plate 97 is fitted onto the boss section 93 and is retained by a C-ring 100. The outer circumferential section of the slip plate 97 is in contact with the left end section of the clutch cover 68. The slip plate 97 is provided between the clutch cover 68 and the idle gear 15.

In the electric starter motor 99 of FIG. 6, the right end side of the gear section 71 of the pinion 14 is in contact with the left side surface of the clutch washer 69 secured within the clutch cover 68. Grease is applied between the slip plate 97 and the clutch cover 68 as well as idle gear 15 and between the gear section 71 and the clutch washer 69 respectively. Here, a relief section 15a of the idle gear 15 may be used as the grease reservoir. Further, the slip plate 95 or 98 may be used instead of the slip plate 97. In addition, the other configuration of the electric starter motor 99 is same as that of the above electric starter motor 1.

The present invention is not limited to the embodiment described above, and it goes without saying that various changes can be made without departing the spirit of the present invention.
For example, in the embodiment described above, there is described an electric starter motor configured to form the grease reservoir 96 circular-groove-like or circular-hole-like. However, the shape of the grease reservoir is not limited thereto, and various shapes such as oval, scattered holes and through-holes may be employed.

On the other hand, in the embodiment described above, there is described an electric starter motor configured to mount the overrunning clutch 13 to the drive shaft 32 driven by the motor 11 via the planetary gear mechanism 12. However, the present invention may be applied to an electric starter motor configured to mount the overrunning clutch to the distal end of the motor shaft 27 or an electric starter motor configured as shown in FIG. 7.

## Claims

1. An electric starter motor with idle gear, **characterized by** comprising:
an output shaft rotated by a motor;
an overrunning clutch mounted to a spline section formed on the output shaft and movable axially along the spline section;
a pinion connected via the overrunning clutch to the output shaft to be rotary-driven in one direction by the rotations of the output shaft and to move axially together with the overrunning clutch;
an idle shaft provided parallel to the output shaft;
an idle gear rotatably and axially movably supported by the idle shaft to engage with and disengage from the ring gear of the engine by the axial movement thereof; and
a slip plate provided between the idle gear and the overrunning clutch and including a slide-contact surface coming into contact with the idle gear and the overrunning clutch, the slide-contact surface being provided with a concave lubricant holding section for holding a lubricant supplied thereto.

2. The electric starter motor with idle gear according to claim 1, **characterized in that**
the slide-contact surface is provided on each of both sides of the ring-like slip plate, and the lubricant holding section is provided annularly along the circumferential direction of the slide-contact surface.

3. The electric starter motor with idle gear according to claim 2, **characterized in that**
a plurality of lubricant holding sections are provided on the slide-contact surface along the radial direction thereof.

4. The electric starter motor with idle gear according to claim 1, **characterized in that**
the slide-contact surface is provided on each of both sides of the ring-like slip plate, and a plurality of lubricant holding sections formed like a circular hole having a bottom is provided on the slide-contact surface along the circumferential direction thereof.

5. The electric starter motor with idle gear according to any one of claims 1 to 4, **characterized in that**
the slip plate is made of a glass-fiber-reinforced synthetic resin.
